Europäisches Patentamt

European Patent Office

Office européen des brevets

(19)

(11) Veröffentlichungsnummer: **0 427 981 A1**

# (12) EUROPÄISCHE PATENTANMELDUNG

(21) Anmeldenummer: 90120263.0

(22) Anmeldetag: 04.10.89

(51) Int. Cl.5: **H01L 41/04, F15B 13/043**

Diese Anmeldung is am 22 - 10 - 1990 als Teilanmeldung zu der unter INID-Kode 60 erwähnten Anmeldung eingereicht worden.

(30) Priorität: **25.10.88 CH 3972/88**

(43) Veröffentlichungstag der Anmeldung:
**22.05.91 Patentblatt 91/21**

(60) Veröffentlichungsnummer der früheren Anmeldung nach Art. 76 EPÜ: **0 366 605**

(84) Benannte Vertragsstaaten:
**AT DE FR GB IT NL SE**

(71) Anmelder: **GEBRÜDER SULZER AKTIENGESELLSCHAFT**
**Zürcherstrasse 9**
**CH-8401 Winterthur(CH)**

(72) Erfinder: **Veletovac, Sead**
**Mösliweg 47**
**CH-3098 Könitz(CH)**

(54) **Elektrohydraulische oder - pneumatische Stellvorrichtung.**

(57) Die Stellvorrichtung weist zwei nach dem Piezo-effekt wirkende Stellorgane (35, 36) auf, von denen jeder aus mehreren Scheiben besteht, deren Dicke sich beim Anlegen einer elektrischen Spannung ändert. Die beiden Stellmotore (35, 36) sind Teile einer elektronischen Schaltung (44), die einen Regelsignale empfangenden Regelungsteil (A) und einen durch eine Niederspannung gespeisten, diese auf die für die Stellmotoren (35, 36) nötige Spannung verstärkenden Ansteuerungsteil (B) aufweist. In diesem Ansteuerungsteil bildet jeder Stellmotor (35, 36) zusammen mit Transistoren (52 bzw. 53), die die vom Regelungsteil (A) kommenden Steuersignale empfangen, sowie mit einer Drossel (55 bzw. 56) und einem von den Steuersignalen des Regelungsteils (A) geschalteten Transistor (58 bzw. 59), einen Energiespeicher.

Fig. 2

EP 0 427 981 A1

# ELEKTROHYDRAULISCHE ODER -PNEUMATISCHE STELLVORRICHTUNG

Die Erfindung betrifft eine Stellvorrichtung mit den Merkmalen des Oberbegriffs des Anspruchs 1, die Gegenstand der europäischen Stammanmeldung Nr. 89810753.7-2307 (0366605) ist. Das Ventil dieser Stellvorrichtung kann -je nach Anwendung - ein Servoventil oder ein Proportionalventil sein.

Aus der US-PS 4 298 181 ist eine elektropneumatische Stellvorrichtung bekannt, bei der jedes Stellorgan aus einem reckteckigen membranartigen Piezokristall besteht, der sich beim Anlegen einer elektrischen Spannung verbiegt und dadurch das zugehörige, als Kugel ausgebildete Auf/Zu-Ventil betätigt, und zwar in schliessendem Sinne. Im spannungslosen Zustand der Stellorgane sind also die Auf/Zu-Ventile offen. Mit den membranartigen Piezokristallen lassen sich nur relativ kleine Stellkräfte erzeugen. Dass der Piezokristall als elektrische Kapazität wirkt, ist in der US-PS als bekannt erwähnt.

Andererseits ist aus der FR-OS 2 425 599 ein Regelventil bekannt, das z.B. in der Vakuumtechnik verwendet wird und mit dem sehr kleine Mengen von unter tiefem Druck befindlichem Gas geregelt werden sollen. Dieses Ventil weist einen Verschlussteil in Form einer Kugel auf, die in einen tellerartigen, im Ventilgehäuse geführten Bauteil gefasst ist. An diesem Bauteil ist eine Stange befestigt, die sich durch einen Stellmotor erstreckt, der aus einer Säule von Piezoscheiben besteht, die beim Anlegen einer elektrischen Spannung ihre Dicke ändern. Die Dickenänderung vergrössert die Höhe der Säule, was über die Stange und den tellerartigen Bauteil ein Abheben der Kugel vom Ventilsitz zur Folge hat.

Der Erfindung liegt die Aufgabe zugrunde, für eine Stellvorrichtung der eingangs genannten Art eine vorteilhafte elektronische Schaltung zu schaffen.

Diese Aufgabe wird erfindungsgemäss durch die Merkmale des Kennzeichens des Anspruchs 1 gelöst. Durch diese Schaltung wird es wegen der Energiespeicherwirkung möglich, die Stellvorrichtung mit einem minimalen Primärenergieaufwand zu betätigen. Dies ist besonders bei Stellmotoren mit mehreren, nach dem Piezoeffekt wirkenden Scheiben bedeutungsvoll, da von diesen Stellmotoren relativ grosse Stellkräfte erzeugt werden; je mehr Scheiben im Stellmotor vereinigt sind, desto grösser wird die Stellkraft.

Ein Ausführungsbeispiel der Erfindung wird in der folgenden Beschreibung anhand der Zeichnung näher erläutert. Es zeigen:

Fig. 1 einen Längsschnitt durch eine elektrohydraulische Stellvorrichtung mit zwei Piezo-Motoren als Stellmotoren und

Fig. 2 ein Schaltschema des elektronischen Teils der Stellvorrichtung.

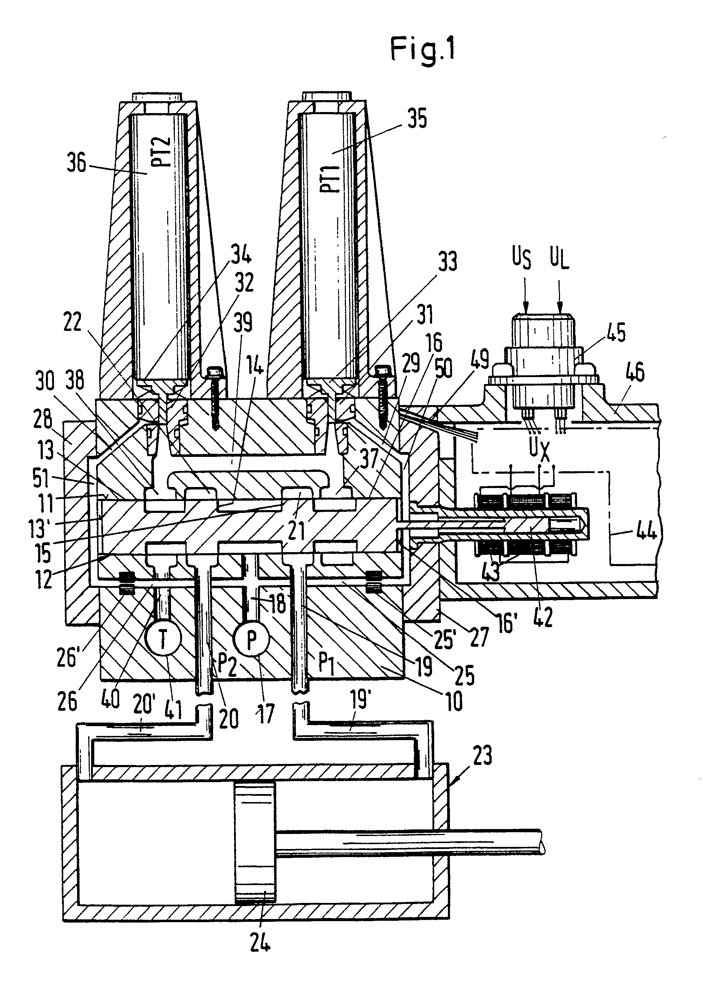

Gemäss Fig. 1 weist ein als Servoventil ausgebildetes Ventil der Stellvorrichtung einen Gehäuseblock 10 auf, der mit einer Längsbohrung 11 versehen ist, in der ein Steuerschieber 12 axial beweglich angeordnet ist. Der Steuerschieber weist vier kolbenartige Abschnitte 13 bis 16 auf, deren Durchmesser gleich dem der Bohrung 11 ist. Er ist mit den beiden äusseren Abschnitten 13 und 16 in der Bohrung 11 gelagert. In der in Fig. 1 gezeichneten Lage befindet sich der Steuerschieber 12 in seiner Neutrallage.

Am Gehäuseblock 10 befindet sich ein Anschluss 17 für die Zufuhr eines hydraulischen Druckmittels, das von einer nicht gezeichneten Pumpe in den Gehäuseblock gefördert wird. Vom Anschluss 17 führt ein Kanal 18 in die Bohrung 11, und zwar zwischen die beiden Kolbenabschnitte 14 und 15 des Steuerschiebers 12. Beiderseits des Kanals 18 sind im Gehäuseblock 10 ein Kanal 19 und ein Kanal 20 vorgesehen, die in eine den Kolbenabschnitt 15 bzw. 14 umgebende Ringnut 21 bzw. 22 münden. Am Austritt der Kanäle 19 und 20 aus dem Gehäuseblock 10 sind Leitungen 19′ bzw. 20′ angeschlossen, die zu einem Kolbenmotor oder Stellzylinder 23 führen. Die Leitungen 19′ und 20′ münden beiderseits eines Kolbens 24 in das Gehäuse des Motors 23.

Vom Kanal 18 zweigen zwei Kanäle 25 und 26 ab, die parallel zur Bohrung 11 in einen Raum 50 bzw. 51 an den Enden der Bohrung 11 führen. Die Räume 50 und 51 sind von je einem sie überspannenden, am Gehäuseblock 10 lösbar befestigten Deckel 27 bzw. 28 begrenzt. Die beiden Kanäle 25 und 26 enthalten je eine Drosselstelle 25′ bzw. 26′. Auf diese Weise wirkt der Druck des hydraulischen Druckmittels auf die beiden äusseren Stirnflächen 13′ und 16′ des Steuerschiebers 12. Vom oberen Bereich der Räume 50 und 51 führt je ein im Gehäuseblock 10 verlaufender Kanal 29 bzw. 30 zu einem im Gehäuseblock untergebrachten Ventilsitzkörper 31 bzw. 32. In den beiden Ventilsitzkörpern 31 und 32 ist je ein Verschlussteil 33 bzw. 34 in Fig. 1 auf- und abverschiebbar, die beide als Auf/Zu-Ventil wirken. Die Verschiebebewegung der Verschlusteile 33 und 34 wird durch je einen Piezo-Motor 35 bzw. 36 erzeugt. Die beiden Piezo-Motoren sind am Gehäuseblock 10 angeflanscht.

In Fig. 1 unterhalb der Ventilsitzkörper 31 und 32 sind im Gehäuseblock 10 je eine Ringnut 37 bzw. 38 vorgesehen, die sich also in der gezeichneten Stellung des Steuerschiebers 12 zwischen den Kolbenabschnitten 15 und 16 bzw. 13 und 14 befinden. Die beiden Ringnuten 37 und 38 sind über einen Kanal 39 miteinander verbunden. Die Ringnut 38 setzt sich in Fig. 1 nach unten in einen Kanal 40 fort, der an einem Anschluss 41 endet, der mit einem nicht gezeichneten Tank in Verbindung steht, in dem hydraulisches Druckmittel gesammelt wird.

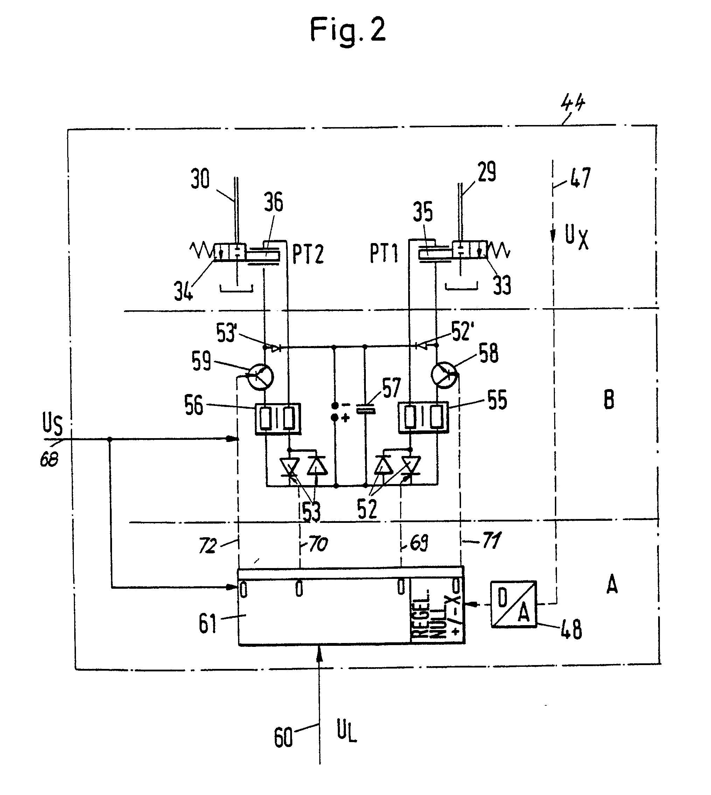

Die Stirnfläche 16' des Steuerschiebers 12 wirkt mit einem Stellungsfühler 42 zusammen, der zusammen mit Induktionsspulen 43 einen Stellungsgeber bildet. Dieser Stellungsgeber ist in einem Gehäuse 46 untergebracht, das in nicht näher dargestellter Weise am Deckel 27 lösbar befestigt ist. Das Gehäuse 46 nimmt auch eine elektronische Schaltung auf, die schematisch durch den Linienzug 44 angedeutet ist und die über Leiter 49 mit den beiden Piezo-Motoren 35 und 36 verbunden ist. Ueber eine am Gehäuse 46 angeschlossene Buchse 45 werden der Stellvorrichtung eine Niederspannung (Pfeil $U_S$) und Regelsignale (Pfeil $U_L$) zugeführt. Die Induktionsspulen 43 liefern analoge Stellungssignale $U_X$, die über eine Signalleitung 47 und einen Analog/Digital-Wandler 48 (Fig. 2) als Rückführung der Schaltung 44 zugeführt werden.

Die im Gehäuse 46 untergebrachte, elektronische Schaltung 44 besteht gemäss Fig. 2 im wesentlichen aus einem Regelungsteil A in Form eines Mikroprozessors 61, der Regelsignale empfängt, verarbeitet und an einen elektrischen Ansteuerungsteil B weitergibt. Dem Regelungsteil A werden einerseits über einen Eingang 60 Regelsignale $U_L$ zugeführt, die z.B. von einem speicherprogrammierbaren Steuersystem (SPS) kommen. Andererseits werden dem Regelungsteil A über eine Leitung 47 und den Wandler 48 die Stellungssignale $U_X$ zugeführt. Der Mikroprozessor 61 verarbeitet diese Signale gemäss einem vorgegebenen wählbaren Satz von Regelparametern, wobei er die über den Eingang 60 zugeführten Regelsignale als Digitalsignale mit variabler Pulsbreite (auch Pulsdauermodulation genannt) an den Ansteuerungsteil B weitergibt, dem über einen Eingang 68 eine Niederspannung $U_S$ (Speisung) zugeführt wird.

Im Ansteuerungsteil B wird die Niederspannung $U_S$ auf eine für die Piezo-Motoren 35, 36 nötige Spannung verstärkt. In den Signalpfaden 69 und 70 vom Mikroprozessor 61 zum Ansteuerungsteil B sind in diesem für den Piezo-Motor 35 bzw. 36 Transistoren 52 bzw. 53, eine Drossel 55 bzw. 56 sowie Transistoren 58 bzw. 59 vorgesehen. Die Schaltstellung der Transistoren 58 und 59 wird vom Mikroprozessor 61 aus über Signalpfade 71 bzw. 72 gesteuert. Zur erwähnten Spannungsverstärkung sind im Ansteuerungsteil B zwei Dioden 52' und 53' sowie ein Kondensator 57 vorgesehen.

Diese Schaltung erlaubt ein Speichern der Energie der Piezo-Motoren. Die im Ansteuerungsteil B für die Piezo-Motoren verstärkte Spannung wird von den vom Regelungsteil A kommenden Steuersignalen über die Transistoren 52 und 58 bzw. 53 und 59 ein- und ausgeschaltet. Da die Piezo-Motoren - elektrisch gesehen - wie Kondensatoren wirken, wird die beim Einschaltvorgang in ihnen gespeicherte Energie beim Ausschaltvorgang wieder an die Speisung zurückgeführt. Dies wird durch die Drossel 55 bzw. 56 erreicht, die auf die Kapazität des zugehörigen Piezo-Motors 35 bzw. 36 abgestimmt ist und mit dem Piezo-Motor zusammen je einen Schwingkreis bildet. Dabei wirken die Transistoren als Schaltelemente, die den Ein- und Ausschwingvorgang so auslösen und unterbrechen, dass mit minimalstem Primärenergieaufwand gearbeitet werden kann.

Die beschriebene Schaltung ist auch bei dem in der Stammanmeldung enthaltenen Ausführungsbeispiel verwendbar.

## Ansprüche

Elektro-hydraulische oder -pneumatische Stellvorrichtung mit einem Ventil, das in einem Gehäuse (10) als bewegliches Ventilglied einen Steuerschieber (12) enthält, der den Zufluss und den Abfluss von Druckmittel zu bzw. von einem Stellzylinder (23) oder dergl. freigibt oder sperrt, wobei ein Vorsteuerelement vorgesehen ist, das abhängig von einem elektrischen Signal den auf die beiden Stirnflächen (13',16') des Steuerschiebers (12) wirkenden Druck des Druckmittels verändert, wodurch sich die Lage des Steuerschiebers (12) relativ zum Ventilgehäuse (10) ändert, wobei das Vorsteuerelement zwei nach dem Piezoeffekt wirkende Stellorgane (35,36) mit je einem daran anliegenden Auf/Zu-Ventil (33,34) umfasst und jeder Stirnfläche (13',16') des Steuerschiebers (12) ein Stellorgan (35,36) und das von ihm betätigte Auf/Zu-Ventil (33,34) zugeordnet ist, und jedes Stellorgan (35,36) als Stellmotor mit mehreren nach dem Piezoeffekt wirkenden Scheiben ausgebildet ist, deren Dicke sich beim Anlegen einer elektrischen Spannung ändert, dadurch **gekennzeichnet**, dass die beiden Stellmotore (35,36) Teile einer elektronischen Schaltung (44) sind, die einen Regelsignale empfangenden Regelungsteil (A) und einen durch eine Niederspannung gespeisten, diese auf die für die Piezomotoren nötige Spannung verstärkenden Ansteuerungsteil (B) aufweist, in dem jeder Stellmotor (35,36) zusammen mit die vom Regelungsteil (A) kommenden Steuersignale empfangenden Transistoren (52 bzw. 53), mit einer Drossel (55 bzw. 56) und einem von den Steuersignalen des Regelungsteils (A) geschalteten Transistor (58 bzw. 59) einen Energiespeicher bildet.

EP 0 427 981 A1

# Fig.1

Fig.1

4

# Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 767 959  (Y SAKAKIBARA ET AL.)<br>* Zusammenfassung; Figur 4 *<br>– – – | 1 | H 01 L<br>41/04<br>F 15 B 13/043 |
| A | GB-A-2 198 604  (BROTHER KOGYO KABUSHIKI KAISHA)<br>* Zusammenfassung; Figur 1 *<br>– – – – – | 1 | |

RECHERCHIERTE SACHGEBIETE (Int. Cl.5)

H 01 L

Der vorliegende Recherchenbericht wurde für alle Patentansprüche erstellt

| Recherchenort | Abschlußdatum der Recherche | Prüfer |
|---|---|---|
| Den Haag | 20 Dezember 90 | PELSERS L. |